# FASCICULE DE BREVET EUROPEEN

(11) **EP 2 315 682 B1**
(45) Date de publication et mention de la délivrance du brevet: **14.03.2012**
(21) Numéro de dépôt: 09809338.8
(22) Date de dépôt: 26.08.2009
(51) Int. Cl.: B60N 2/28

(54) **SIEGE AUTO POUR ENFANT A EMBASE INCLINEE**
KINDERSICHERHEITSSITZ MIT GENEIGTER BASIS
CHILD CAR SEAT WITH INCLINED BASE

(30) Priorité: 26.08.2008 FR 0855723
(43) Date de publication de la demande: 04.05.2011
(73) Titulaire: Dorel France SA, 49309 Cholet Cedex (FR)
(72) Inventeur: BIAUD, Richard, F-49340 Trementines (FR)
(74) Mandataire: Bioret, Ludovic
(86) Numéro de dépôt international: PCT/EP2009/061020
(87) Numéro de publication internationale: WO 2010/023230

(56) Documents cités:
- EP-A- 0 751 035
- WO-A-2005/002908
- WO-A-2007/029010
- DE-A1- 10 104 137
- DE-A1- 19 636 013

## Description

### 1. Domaine de l'invention

Le domaine de l'invention est celui de la puériculture. Plus précisément l'invention concerne les sièges auto pour enfant, destinés à être installés sur les sièges de véhicules automobiles.

### 2. Art antérieur

On connaît plusieurs types de sièges auto pour enfants, ou sièges auto, qui sont adaptés aux différents âges de l'enfant.

Parmi ces sièges auto, on connaît notamment des sièges auto dits « groupe 0/0 + », qui sont adaptés et homologués pour les enfants depuis leur naissance jusqu'à ce qu'ils pèsent environ 13 kilos. Ces sièges auto sont prévus pour être installés dans une position « dos à la route », l'enfant étant tourné vers l'arrière du véhicule. Ils permettent que l'enfant soit installé dans une position semi-allongée, dans laquelle il est suffisamment incliné pour que le poids de sa tête ne soit pas supporté intégralement par son cou et son dos. En effet, le dos et le cou des enfants de cet âge ne sont pas encore suffisamment robustes pour supporter sur une longue durée le poids de la tête.

On connaît également des sièges auto dits « groupe 1 » qui sont adaptés et homologués pour les enfants pesant entre 9 et 18 kilos. Les enfants sont alors installés dans ces sièges auto en position assise, et généralement en position « face à la route », orienté vers l'avant du véhicule.

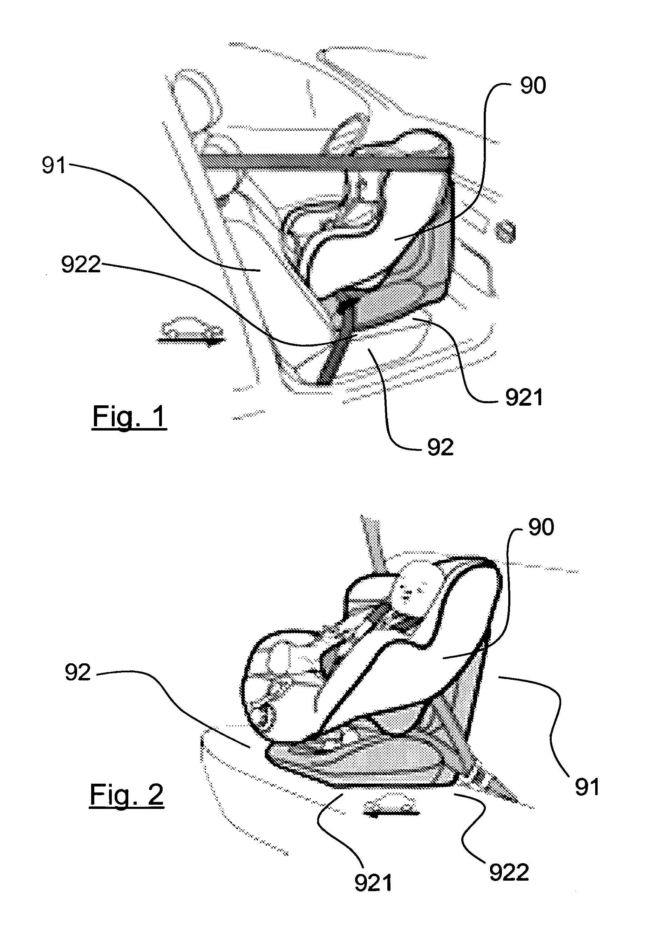

Certains sièges auto sont conçus pour pouvoir être utilisés comme des « groupes 0 + » ou des « groupes 1 » selon la position dans laquelle ils sont installés. Les figures 1 et 2 montrent un tel siège auto 90 connu pouvant être utilisé dans ces deux positions. De tels sièges auto peuvent ainsi être installés dans une position face à la route telle que l'enfant se trouve assis (position illustrée par la figure 2, correspondant à une utilisation en « groupe 1 ») et dans une position dos à la route, telle que le bébé se trouve en position semi-allongée (position illustrée par la figure 1, correspondant à une utilisation en « groupe 0+ »). Dans cette position, l'inclinaison du siège est généralement réglable.

Les sièges auto sont souvent maintenus sur le siège ou la banquette du véhicule à l'aide d'une des ceintures de sécurité de ce dernier.

Comme le montrent les figures 1 et 2, il est alors nécessaire, sur de tels sièges auto pouvant prendre deux positions d'installation, de prévoir deux systèmes différents de fixation par les sangles de la ceinture de sécurité du véhicule, un premier système pour la fixation face à la route et un second système pour la fixation dos à la route. En effet, la longueur de sangle étant réglementaire, celle-ci doit être respectée dans les deux positions du siège auto (la position dos à la route étant connue comme fortement consommatrice de longueur de sangle).

Il est également souhaitable d'ajuster l'inclinaison du siège auto 90 dans chacune de ces deux positions (ou au moins dans l'une d'entre elles) pour que l'enfant puisse être en position assise quand il est face à la route et en position semi assise suffisamment inclinée quand il est dos à la route. Cet ajustement de l'inclinaison du siège auto 90 doit tenir compte du fait que l'assise 92 du siège du véhicule 91 est généralement inclinée, classiquement selon un angle de 3 à 13 degrés par rapport à l'horizontale, l'arrière 922 de l'assise 92 (zone voisine du dossier), étant plus bas que l'avant 921 de l'assise 92.

Il est donc nécessaire de proposer sur ces sièges auto une grande amplitude d'inclinaison pour pouvoir offrir des positions du siège auto appropriées pour une utilisation en « groupe 0+ » et en « groupe 1 ». Sur certains sièges auto, cette inclinaison est assurée à l'aide d'une cale mobile, pouvant être déployée sous le siège dans une position inclinée du siège, et retirée ou rétractée dans l'embase du siège dans une position non inclinée de celui-ci. Ces cales rétractables sont de faible qualité et peu stables.

Par ailleurs, de tels sièges présentent des risques d'utilisation inappropriée de la cale rétractable. En effet, l'utilisateur peut être tenté de la déployer alors que le siège est dans une configuration dans laquelle le siège ne devrait pas être incliné, ou au contraire de la placer en position rétractée alors que le siège est dans une configuration dans laquelle le siège devrait être incliné. De telles utilisations inappropriées de la cale peuvent engendrer des blessures, en cas de choc, pour l'enfant installé dans le siège.

Enfin, les points d'accrochage, du siège auto pour enfant au siège du véhicule, étant différenciés dans les deux positions (face à la route et dos à la route) et l'inclinaison, entre la position face à la route et la position dos à la route, devant être modifiée, le passage de l'une à l'autre desdites positions est rendu relativement complexe.

### 3. Objectif de l'invention

L'invention a notamment pour objectif de pallier ces inconvénients de l'art antérieur.

Plus précisément, un objectif de l'invention est de fournir un siège auto pouvant être utilisé, au choix, en configuration homologuée « groupe 1 », face à la route, ou en en configuration homologuée « groupe 0+ », dos à la route, et permettant un passage particulièrement facile de l'une à l'autre de ces configurations.

Notamment, un objectif de l'invention est de fournir un tel siège auto dont le système de fixation au siège du véhicule est simplifié par rapport au siège auto de l'art antérieur, quelle que soit la position retenue.

Ainsi, un autre objectif de l'invention est de mettre en oeuvre un tel siège auto dans lequel les positions d'inclinaison puissent être bien adaptées au besoin de l'enfant, tant dans une position « groupe 0+ », dos à la route, que dans une position « groupe 1 », face à la route.

Un autre objectif de l'invention est de mettre en oeuvre un tel siège qui soit simple à fabriquer et peu coûteux.

### 4. Résumé de l'invention

Ces objectifs, ainsi que d'autres qui apparaîtront par la suite, sont atteints à l'aide d'un siège auto pour enfant comportant une embase et un fauteuil, ledit fauteuil comportant une assise et un dossier, ladite embase présentant une surface inférieure destinée à venir en appui sur l'assise d'un siège de véhicule, une première zone d'extrémité destinée à être placée à proximité de la base du dossier dudit siège de véhicule, et une seconde zone d'extrémité destinée à être placée à proximité de la partie de l'assise dudit siège de véhicule éloignée dudit dossier.

Le siège auto comprend des moyens d'assemblage permettant deux positions d'assemblage dudit fauteuil à ladite embase :
- une première position dans laquelle le dossier dudit fauteuil est situé au-dessus de ladite première zone d'extrémité de ladite embase ; et
- une seconde position axialement symétrique par rapport à ladite première position, ledit dossier étant situé au-dessus de ladite seconde zone d'extrémité de ladite embase,
   l'axe de symétrie entre lesdites première et seconde positions dudit fauteuil étant non perpendiculaire à un plan de base défini par ladite surface inférieure de ladite embase.

Selon l'invention, le fauteuil comprend des moyens d'inclinaison de confort permettant de faire varier l'inclinaison de l'assise et/ou du dossier dudit fauteuil par rapport à ladite embase, dans au moins une desdites positions, et des moyens de verrouillage empêchant l'utilisation desdits moyens d'inclinaison de confort dans une desdites première ou deuxième positions.

La première position peut notamment correspondre à une position face à la route, et la seconde position à une position dos à la route.

Ainsi, l'invention permet de contrôler simplement et efficacement l'inclinaison du fauteuil par rapport au siège du véhicule. En effet, les angles formés entre l'assise du fauteuil et la surface inférieure de l'embase (correspondant à la surface de l'assise du siège du véhicule) sont différents dans ladite première position et dans ladite seconde position.

L'embase prend une position unique, et définit schématiquement, en section, sensiblement une forme s'inscrivant dans un triangle dont deux angles définissent un côté (bord épais par la suite) venant contre le dossier du siège du véhicule, ou au voisinage de celui-ci, et dont le troisième angle correspond au bord opposé de l'embase, orienté vers l'avant du véhicule. Le côté supérieur de ce triangle définit donc un plan incliné vers l'avant du véhicule, et l'axe de symétrie, perpendiculaire à ce plan incliné est non perpendiculaire au plan de base (qui correspond au plan défini par le dessous de l'embase, et donc sensiblement au plan défini par la surface de l'assise du véhicule sur laquelle l'embase repose, qui est sensiblement horizontal).

Selon l'invention, le siège auto pour enfant présente en outre des moyens d'inclinaison de confort réglable de l'assise et du dossier du fauteuil qui ne peuvent être mis en oeuvre que dans une des positions du siège, et notamment la position face à la route, notamment pour des raisons de sécurité.

Avantageusement, ladite embase présente des moyens de fixation au véhicule automobile placés de façon que ladite première zone d'extrémité se trouve à proximité du dossier dudit siège du véhicule automobile.

Du fait que l'embase reste dans la même position par rapport au siège du véhicule, ces moyens de fixation sont bien sûr utilisables dans ladite première et dans ladite seconde positions.

Selon un mode de mise en oeuvre particulier, lesdits moyens de fixation présentent un passage de sangle s'étendant dans ladite embase et définissant une surface d'appui, pour une sangle, sensiblement verticale.

On dispose ainsi d'un mode de fixation simple et efficace, pour la sangle ventrale de la ceinture de sécurité du véhicule. Des moyens complémentaires peuvent être prévus pour maintenir la partie supérieure du siège auto.

Selon un premier mode de réalisation de l'invention, lesdits moyens d'assemblage comprennent des moyens de solidarisation réversibles, aptes à solidariser le fauteuil à ladite embase dans ladite première position et dans ladite seconde position.

Selon un deuxième mode de réalisation, lesdits moyens d'assemblage comprennent des moyens de pivotement permettant le passage de ladite première position à ladite seconde position, et réciproquement, par rotation dudit fauteuil par rapport à ladite embase selon ledit axe de symétrie.

Dans les deux cas, le passage d'une position à l'autre est simple et efficace. Selon une mise en oeuvre particulière, ledit fauteuil comporte une platine formant une partie desdits moyens de pivotement et portant une partie desdits moyens d'inclinaison de confort.

Selon une caractéristique particulière, lesdits moyens d'inclinaison de confort peuvent comprendre au moins une glissière dans laquelle peut circuler une tige, et une crémaillère associée à ladite glissière de façon à permettre l'immobilisation de ladite tige dans ladite glissière.

Il est ainsi aisé de régler l'inclinaison du fauteuil.

On peut prévoir que ladite platine comprend un mécanisme de verrouillage, empêchant l'utilisation desdits moyens d'inclinaison de confort dans une desdites première ou deuxième positions.

Par exemple, lesdits moyens de verrouillage peuvent comprendre un élément mobile pouvant pénétrer, dans une desdites première ou deuxième positions, dans un logement ménagé dans la surface supérieure de ladite embase.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1 et 2, qui ont été commentées ci-dessus, représentent un siège auto de l'art antérieur installé dans un véhicule automobile, respectivement dans une position dos à la route et face à la route ;
- les figures 3 et 4 représentent de façon schématique un siège auto selon un premier mode de réalisation de l'invention, respectivement dans sa configuration destinée à être installé face à la route et dans sa configuration destinée à être installé dos à la route ;
- les figures 5 et 6 représentent de façon schématique un siège auto selon un deuxième mode de réalisation de l'invention, respectivement dans sa configuration destinée à être installé face à la route et dans sa configuration destinée à être installé dos à la route ;

- les figures 7 à 9 représentent de façon plus détaillée un exemple de siège auto selon le mode de réalisation des figures 5 et 6, dans sa position face à la route, respectivement en vue de perspective de face (permettant de voir le siège de devant), en vue de côté et en vue de perspective de derrière (permettant de voir le siège de l' arrière) ;
- les figures 10 à 12 représentent le siège des figures 7 à 9 dans sa position dos à la route, respectivement en vue de perspective de devant, en vue de côté, et en vue de perspective de derrière ;
- les figures 13 à 15 représentent le siège des figures 7 à 12 dans une variante de sa position des figures 7 à 9, dans laquelle l'assise est inclinée par rapport à l'embase ;
- les figures 16 à 18 sont des vues de coupe selon son plan de symétrie du siège représenté sur les figures 7 à 15, respectivement dans sa position représentée sur les figures 7 à 9, dans sa position représentée sur les figures 10 à 12 et dans sa position représentée sur les figures 13 à 15 ;
- les figures 19 à 21 sont des vues de détail respectivement des figures 16 à 18, détaillant le mécanisme de verrouillage de l'inclinaison du siège.

### 6. Description détaillée de l'invention

### 6.1 Rappel du principe de l'invention

Le principe général de l'invention repose sur une embase formant la partie inférieure du siège auto et définissant un plan de référence non parallèle à la surface inférieure d'appui sur le siège du véhicule. Ce plan de référence permet de définir un axe de symétrie, perpendiculaire à ce plan.

Ainsi, une section de l'embase s'inscrit, de façon schématique, sensiblement dans un triangle, et plus exactement dans un trapèze. Ce trapèze comprend quatre côtés :
- un premier côté correspondant à la surface inférieure de l'embase, ou surface d'appui du siège auto sur l'assise du siège du véhicule ;
- un deuxième côté correspondant à la surface supérieure de l'embase, ou plus généralement au plan de référence, et qui n'est pas parallèle au premier côté ;
- un troisième côté, appelé bord épais ou première zone d'extrémité, correspondant à l'arrière de l'embase (zone proche du dossier du siège du véhicule), et reliant les premier et deuxième côtés ;
- un quatrième côté, appelé bord fin ou seconde zone d'extrémité, correspondant à l'avant de l'embase (zone éloignée du dossier du siège du véhicule), et reliant les premier et deuxième côtés. Ce quatrième côté présente une épaisseur inférieure au troisième côté.

Schématiquement, le quatrième côté, qui peut présenter une faible épaisseur, est assimilé par la suite à la pointe d'un triangle dans lequel s'inscrit le trapèze.

En position d'utilisation, cette embase est placée dans le véhicule de façon à ce que le bord épais de l'embase, ou première zone d'extrémité, soit placé sur l'arrière de l'assise du siège du véhicule, à proximité du dossier de celui-ci, et la pointe du triangle, correspondant au bord fin de l'embase, ou seconde zone d'extrémité, soit placé sur l'avant de l'assise du siège du véhicule. Ainsi, la partie supérieure de l'embase, ou deuxième côté, définit un plan incliné vers l'avant du siège (et donc l'avant du véhicule).

Le fauteuil peut être monté sur cette embase :
- soit dans une configuration « groupe 1 », destinée à être installée « face à la route » (appelée par simplification « position face à la route », ou « première position ») ;
- soit dans une configuration « groupe 0+ », destinée à être installée « dos à la route » (appelée par simplification « position dos à la route », ou « seconde position »), dans laquelle la position du fauteuil correspond à une symétrie axiale de sa position en configuration « groupe 1 ».

L'embase reste dans les deux cas dans la même position, sans modification lorsqu'on passe de la configuration « groupe 0+ » à « groupe 1 » et vice-versa. Le bord épais reste toujours au voisinage du dossier du siège du véhicule.

Le plan de la surface supérieure de l'embase, ou plan de référence, formant un angle avec le plan de l'assise du siège du véhicule, ou plan de base (angle entre le premier et le deuxième côtés), l'axe de symétrie entre les deux positions du fauteuil forme le même angle avec la perpendiculaire au plan de l'assise du siège du véhicule. L'inclinaison du fauteuil du siège auto par rapport au plan de l'assise du siège du véhicule est en conséquence différente selon que le siège auto est en position « groupe 1 » ou en position « groupe 0+ ».

En outre, le fauteuil comprend des moyens d'inclinaison de confort permettant de faire varier l'inclinaison de l'assise et/ou du dossier du fauteuil par rapport à ladite embase, ces moyens d'inclinaison n'étant actifs que dans une des positions, et notamment la position face à la route, des moyens de verrouillage empêchant l'utilisation des moyens d'inclinaison de confort dans la position dos à la route.

Plusieurs modes de solidarisation du fauteuil à l'embase sont envisageables. On décrit ci-après un premier mode de réalisation, selon lequel l'embase et le fauteuil sont équipés d'éléments d'assemblage réversibles, permettant un assemblage dans les deux positions, puis un second mode de réalisation selon lequel le fauteuil peut pivoter autour de l'axe de symétrie.

### 6.2 Premier mode de réalisation, à éléments d'assemblage

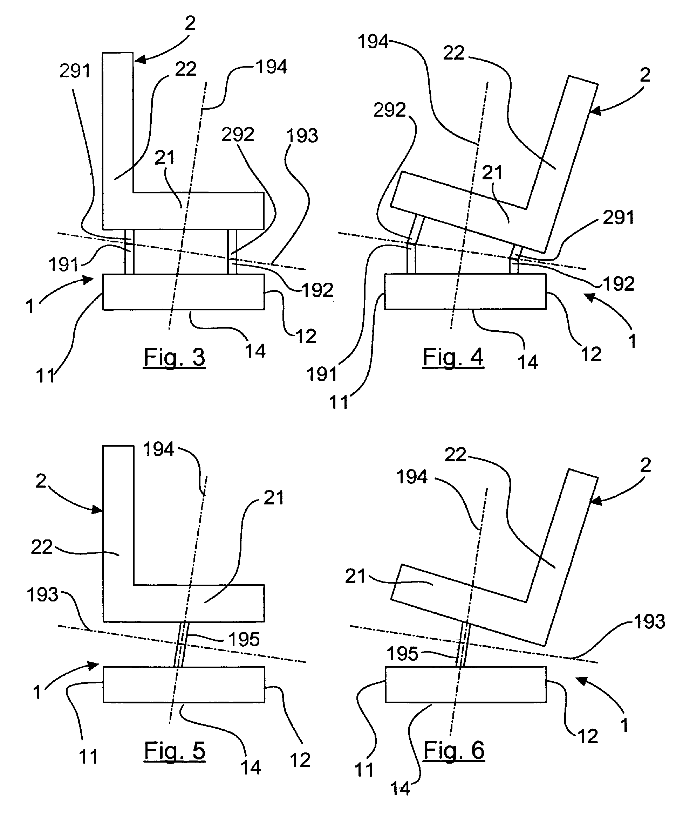

Les figures 3 et 4 représentent de façon schématique un siège auto selon un premier mode de réalisation de l'invention, respectivement dans sa configuration destinée à être installée face à la route et dans sa configuration destinée à être installée dos à la route.

Ce siège auto comporte une embase 1 présentant un premier élément d'assemblage 191, proche d'un premier bord 11 de l'embase, ou première zone d'extrémité, et un second élément d'assemblage 192 proche d'un bord 12 de l'embase, ou seconde zone d'extrémité. Le siège auto comporte également un fauteuil 2 comprenant une assise 21 et un dossier 22, et présentant, sur la partie inférieure de l'assise 21, un premier élément d'assemblage 291 proche du dossier 22 du fauteuil et un second élément d'assemblage 292 éloigné du dossier 22.

Chacun des éléments d'assemblage de l'embase est conçu pour s'assembler avec l'un quelconque des éléments d'assemblage du fauteuil, de façon à configurer le siège auto :
- soit dans une première position, représentée par la figure 3, dans laquelle le dossier 22 du fauteuil 2 est situé au-dessus du bord 11 de l'embase ;
- soit dans une seconde position, représentée par la figure 4, dans laquelle le dossier 22 du fauteuil 2 est situé au-dessus du bord 12 de l'embase.

La première position est symétrique à la seconde position, par rapport à un axe 194 perpendiculaire au plan de référence 193 passant par la surface supérieure des éléments d'assemblage 191 et 192 de l'embase. Selon l'invention, ce plan 193 n'est pas parallèle à la surface inférieure 14 de l'embase. L'axe 194 n'est donc pas perpendiculaire à la surface inférieure 14 de l'embase.

En conséquence, le fauteuil 2 (et en particulier l'assise 21) présente, dans la première position, représentée par la figure 3, et dans la seconde position, représentée par la figure 4, une inclinaison différente par rapport à la surface inférieure 14 de l'embase.

### 6.3 Deuxième du mode de réalisation, à fauteuil pivotant

Les figures 5 et 6 représentent de façon schématique un siège auto selon un deuxième mode de réalisation de l'invention, respectivement dans sa configuration destinée à être installée face à la route et dans sa configuration destinée à être installée dos à la route. Ce siège comporte une embase 1 et un fauteuil 2 assemblés pivotants l'un par rapport à l'autre par l'intermédiaire d'un pivot 195, selon un axe de rotation commun avec l'axe de symétrie 194.

Le siège auto peut ainsi être mis dans une première position, représentée par la figure 5, dans laquelle le dossier du fauteuil 2 est situé au-dessus du bord 11 de l'embase, et une seconde position, représentée par la figure 6, dans laquelle le dossier du fauteuil 2 est situé au-dessus du bord 12 de l'embase.

La première position du fauteuil 2 est symétrique à la seconde position, par rapport à l'axe de rotation 194. Selon l'invention, l'axe de rotation 194 n'est pas perpendiculaire à la surface inférieure 14 de l'embase (mais perpendiculaire au plan de référence 193). En conséquence, le fauteuil 2 présente, dans la première configuration, représentée par la figure 5, et dans la seconde configuration, représentée par la figure 6, une inclinaison différente par rapport à la surface inférieure 14 de l'embase.

Il est à noter que l'angle que forme l'axe 194 par rapport à la perpendiculaire à la surface inférieure de l'embase est de préférence supérieur à 7° (7 degrés), pour avoir un effet sensible sur l'inclinaison du fauteuil. Les expressions « non parallèle » et «non perpendiculaire » doivent donc être interprétées, dans la présente demande de brevet, comme signifiant respectivement « formant un angle de plus de 7° avec la parallèle » et « formant un angle de plus de 7° avec la perpendiculaire ».

### 6.4 Exemple de mise en oeuvre du deuxième mode de réalisation

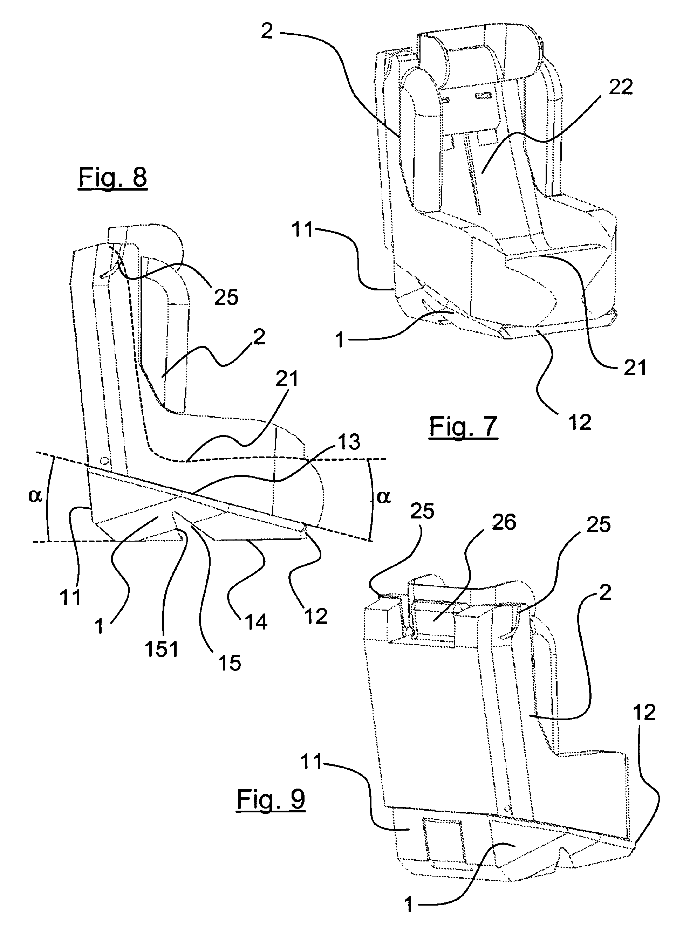

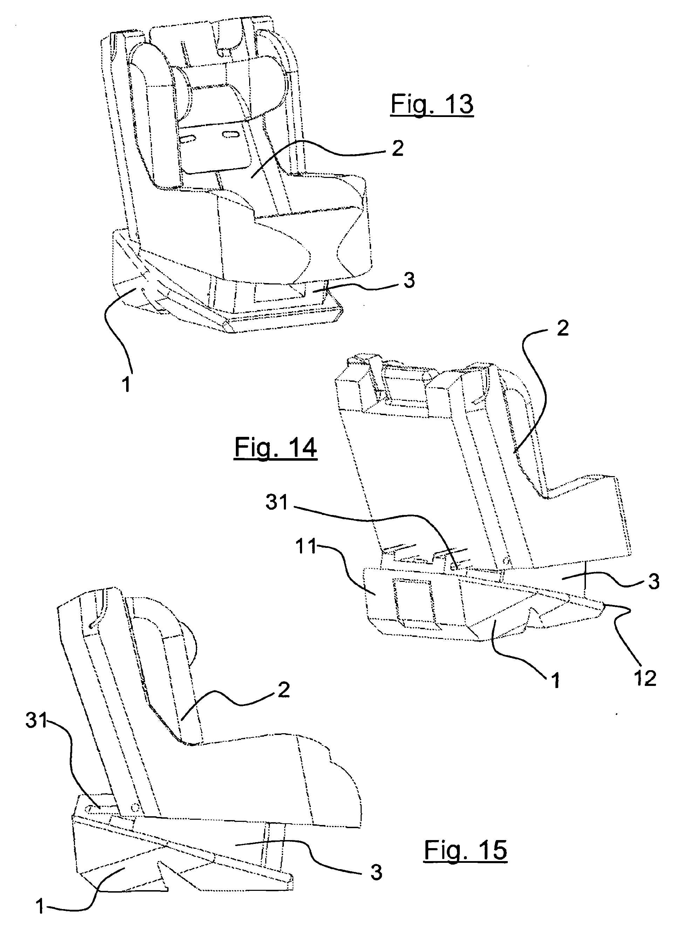

Les figures 7 à 21 présentent de façon plus détaillée un siège auto selon le mode de réalisation des figures 5 et 6. Ce siège auto est donc composé d'un fauteuil 2 fixé sur une embase 1. L'embase 1 est la partie du siège auto qui est destinée à être placée sur l'assise du siège du véhicule automobile. Le fauteuil 2 est la partie du siège auto dans laquelle doit être installé l'enfant. Ce fauteuil 2 comprend notamment une assise 21, un dossier 22, et une platine 3 (visible sur les figures 13 à 21) par l'intermédiaire de laquelle il est assemblé à l'embase 1.

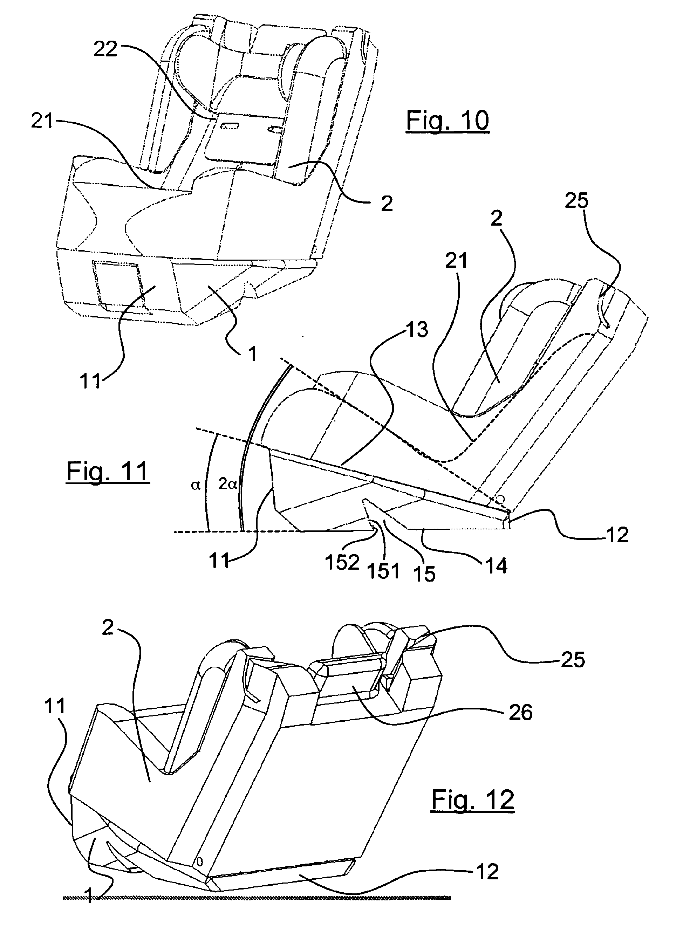

L'embase 1 présente, dans le plan de symétrie du siège auto, une section de forme sensiblement triangulaire. Ainsi, elle présente une première zone d'extrémité, proche d'un de ses bords 11, dit bord épais, et correspondant à un côté du triangle défmi ci-dessus, plus épaisse qu'une seconde zone d'extrémité, proche du bord opposé 12, dit bord fin, et correspondant sensiblement à la pointe du triangle opposée au bord 11. La surface supérieure 13 de cette embase (définissant le plan de référence) forme ainsi, dans le plan de symétrie du siège, un angle α (représenté sur les figures 8 et 11) avec la surface inférieure 14 de l'embase (définissant le plan de base). Cet angle α se retrouve sensiblement entre le plan de référence et le plan défini par l'assise du siège auto.

Le fauteuil 2 peut être monté sur l'embase 1 dans deux configurations. La première de ces configurations, dite « groupe 1 », est représentée par les figures 7 à 9. Dans cette configuration, l'avant de l'assise 21 du fauteuil 2 est placée au-dessus de la seconde zone d'extrémité de l'embase 1, et le dossier 22 du fauteuil 2 est placé au-dessus de la première zone d'extrémité de l'embase 1.

Cette configuration « groupe 1 » est prévue pour utiliser le siège auto en position « face à la route ». Ainsi, la surface inférieure 14 de l'embase 1 doit être placée contre l'assise du siège du véhicule automobile, et le bord épais 11 de l'embase 1 prend appui contre le bas du dossier de ce siège du véhicule automobile. L'angle que forme l'assise 21 par rapport à la surface inférieure de l'embase 14 est adapté pour que le siège, quand il est installé en position « face à la route » sur l'assise du véhicule présentant elle-même une inclinaison, offre une position assise à l'enfant.

La deuxième de ces configurations, dite configuration « groupe 0+ », est représentée sur les figures 10 à 12. Dans cette configuration, l'avant de l'assise 21 du fauteuil 2 est placé au-dessus la première zone d'extrémité de l'embase 1 et le dossier 22 du fauteuil 2 est placé au-dessus de la seconde zone d'extrémité de l'embase 1.

La position du fauteuil 2 dans la configuration « groupe 0+ » est symétrique à sa position dans la configuration « groupe 1 », par rapport à un axe perpendiculaire à la surface supérieure 13 de l'embase. La surface supérieure 13 de cette embase formant un angle α avec la surface inférieure 14 de l'embase, l'axe de symétrie forme le même angle α avec la perpendiculaire à la surface inférieure 14 de l'embase.

Cette configuration « groupe 0+ » est prévue pour une utilisation du siège auto pour enfant dans une position « dos à la route ». Dans cette configuration, l'angle que forme l'assise 21 du fauteuil 2 avec la surface de base, correspondant à la face inférieure 14 de l'embase est différent (d'un angle de 2α) de celui qu'elle forme dans la configuration représentée par les figures 7 à 9, permettant au siège auto, quand il est installé dans le véhicule dos à la route, d'offrir une position semi-allongée (ou semi-assise) à l'enfant.

Ainsi, dans la configuration « groupe 1 », le plan de base et le plan de l'assise 21 sont sensiblement parallèle, et forment donc un angle sensiblement égal à α - α = 0. Dans la configuration « groupe 0+ » en revanche, le plan de base et le plan de l'assise 21 forment un angle sensiblement égal à α + α = 2α.

Cette différence d'angle permet que l'angle d'assise du siège auto pour enfant soit optimal, aussi bien en « groupe 1 » dans la position « face à la route » qu'en « groupe 0+ » dans la position dos à la route, tout en compensant la propre inclinaison de l'assise du siège du véhicule.

Il est à noter qu'aucun réglage (notamment de l'inclinaison) autre que le changement de position du fauteuil 2 par rapport à l'embase 1 n'est à effectuer entre ces deux positions.

### 6.5 Fixation du siège auto au siège du véhicule

Dans les deux configurations d'utilisation du siège auto selon l'invention, l'embase 1 est prévue pour être placée dans la même position sur le siège du véhicule automobile. Ainsi, le côté épais 11 de cette embase 1 est, dans ces deux positions, proche du (sinon en contact avec le) bas du dossier du siège du véhicule automobile.

L'embase 1 peut ainsi présenter un seul système de fixation au siège du véhicule automobile, qui sera utilisé dans les deux configurations possibles du siège auto. Il y a en fait deux positions pour le fauteuil par rapport à l'embase, mais une unique position pour l'embase par rapport au siège du véhicule.

Ce système de fixation peut notamment être un passage de sangle unique. Le siège auto représenté sur les figures 7 à 12 est ainsi conçu pour être fixé au siège du véhicule par la ceinture de sécurité. Une fente de passage de sangle 15 s'étendant sur toute la largeur de l'embase 1 est ménagée dans la surface inférieure 14 de l'embase et permet le passage de la sangle ventrale de la ceinture de sécurité au travers l'embase 1, la sangle ventrale prenant appui contre une surface 151 sensiblement verticale.

Avantageusement, la fente présente la forme d'une encoche, avec une ouverture d'introduction de la sangle plus large que le fond, pour faciliter l'introduction de la sangle. Une zone de retenue 152 peut être prévue au bord de la surface d'appui 151, au voisinage de l'ouverture de la fente, pour faciliter la mise en place et le maintien de la sangle ventrale. La surface d'appui 151 peut être légèrement inclinée par rapport à la verticale, le fond de la fente en direction du bord épais, toujours pour assurer le guidage et le maintien de la sangle.

Ainsi, lorsque la sangle ventrale est plaquée contre la surface d'appui 151 et tendue, la partie inférieure du siège auto est efficacement retenue.

Avantageusement, la fente se trouve sensiblement sous le dossier 22, lorsque le siège est en position face à la route.

Des fentes de passage de sangle 25 et un chemin supérieur de sangle 26 (visible sur les figures 9 et 12), sont également prévus en haut du dossier du siège auto. Ces éléments permettant le passage de la sangle pectorale de la ceinture de sécurité du véhicule, pour le maintien de la partie supérieure du siège auto. Ils sont conçus pour être utilisés dans les différentes positions décrites ci-dessus.

Selon un mode de réalisation alternatif de l'invention, un système de fixation par pinces, normalisé sous la dénomination « Isofix » (marque déposée), peut être installé sur l'embase 1, pour une fixation à des crochets complémentaires prévus sur les véhicules équipés à cet effet.

### 6.6 Passage d'une configuration à l'autre par pivotement autour d'un axe de rotation

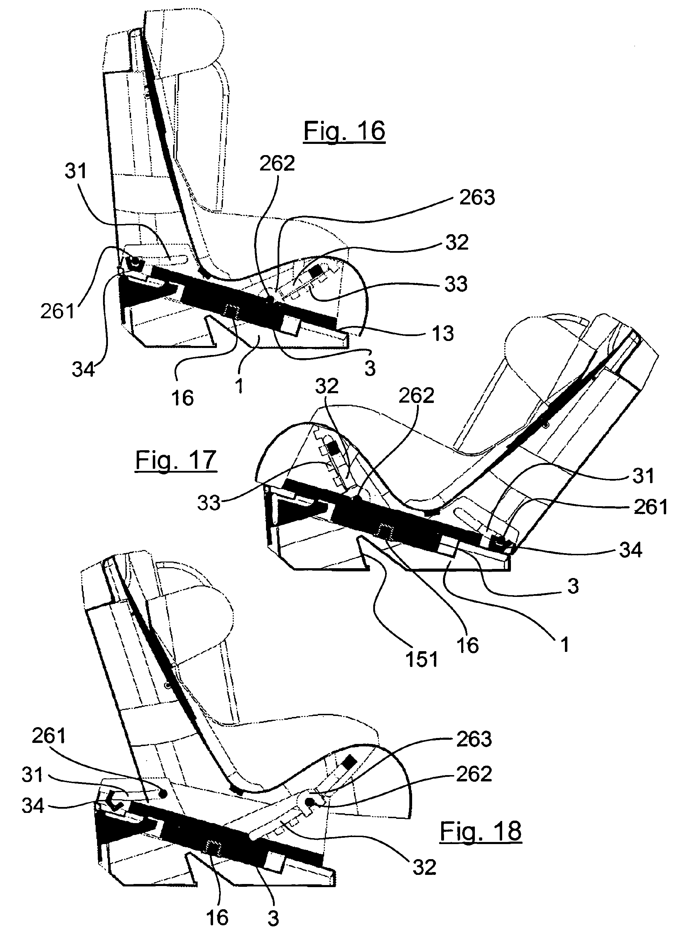

Les figures 16 et 17 sont des représentations en coupe du siège auto pour enfant des figures 7 à 12 respectivement dans les configurations « groupe 1 » (face à la route) et « groupe 0+ » (dos à la route).

Ces vues en coupe, selon un plan correspondant au plan de symétrie de ce siège, montrent que l'embase 1 est munie, sur sa surface supérieure 13, d'un plot 16 formant un axe de rotation autour duquel peut pivoter la platine 3 du fauteuil 2. Cet axe de rotation correspond à l'axe de symétrie 194 entre les deux positions du fauteuil par rapport à l'embase.

Le changement de position du fauteuil 2 par rapport à l'embase 1 entre la configuration « groupe 1 » et la configuration « groupe 0+ » peut donc se faire très facilement par un pivotement du fauteuil 2 par rapport à l'embase 1 selon un axe perpendiculaire au plan défini par la surface supérieure 13 de l'embase 1 et passant par le plot 16.

Ce changement de configuration est donc particulièrement facile à mettre en oeuvre. Bien entendu, des mécanismes de verrouillage, non représentés, permettent de verrouiller la position du fauteuil 2 par rapport à l'embase 1 dans chacune des configurations d'utilisation.

### 6.7 Réglage de confort en inclinaison

Dans la configuration « groupe 1 », il peut être souhaitable de pouvoir incliner plus ou moins le fauteuil 2 du siège auto afin d'offrir une position confortable à l'enfant. En revanche, dans la configuration « groupe 0+ », dans laquelle le siège est déjà fortement incliné pour offrir une position semi assise, il ne faut généralement pas que le siège puisse être incliné davantage. En effet, une inclinaison supérieure pourrait être dangereuse en cas d'accident.

Le siège auto pour enfant selon l'invention présente donc, selon un mode de réalisation particulier, un mécanisme d'inclinaison de confort réglable de l'assise 21 et du dossier 22 du fauteuil 2 qui ne peut être mis en oeuvre que lorsque le siège est en configuration « groupe 1 ». Les figures 13 à 15 et 18 représentent ce siège auto pour enfant dans la configuration « groupe 1 » et présentant une inclinaison de confort maximale.

Comme on peut le voir sur les figures 16 à 18, la platine 3 située à la base du fauteuil du siège auto porte deux glissières 31 et 32. Des tiges 261 et 262, liées au dossier et à l'assise du fauteuil 2, peuvent circuler respectivement dans les glissières arrière 31 et avant 32 entre la position représentée sur la figure 16 et celle représentée sur la figure 18. La glissière avant 32 est équipée d'une crémaillère 33 dans laquelle peut s'engager un élément mobile de verrouillage 263 lié à l'assise 21. Cet élément mobile de verrouillage 263 peut bloquer ainsi la position de la tige 262 dans la glissière avant 32, ce qui verrouille la position d'inclinaison de l'assise et du dossier du fauteuil 2.

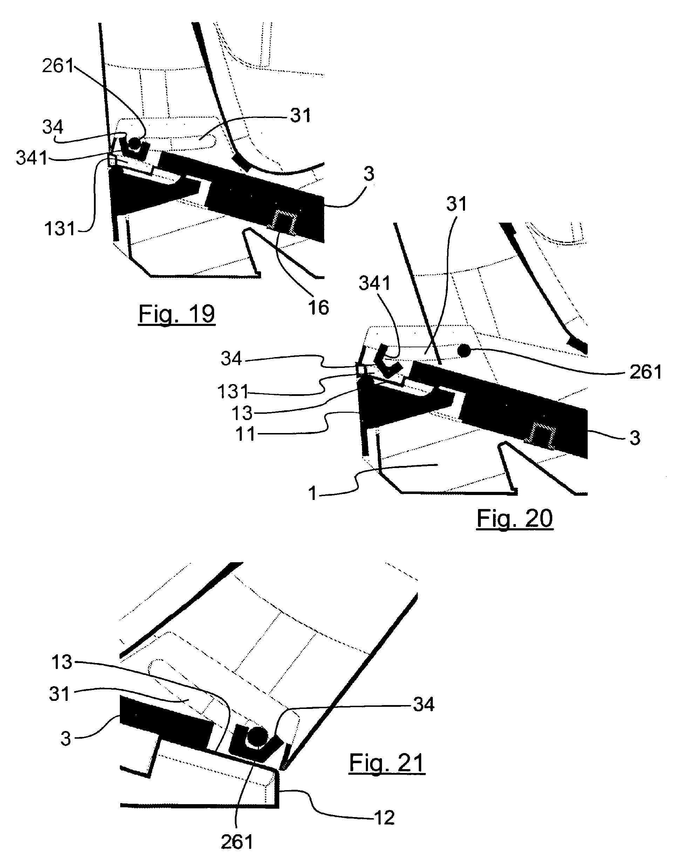

La glissière arrière 31 coopère avec un crochet 34 mobile par rapport à cette glissière arrière 31 entre deux positions. Les figures 19 à 21, qui sont des vues de détail respectivement des figures 16 à 18, représentent plus clairement les différentes positions possibles de ce crochet 34.

Lorsque le siège auto est en configuration « groupe 1 » et que l'assise et le dossier du fauteuil sont inclinés, dans une inclinaison de confort, le crochet 34 est maintenu par des moyens de rappel (non illustrés sur les figures) dans sa position représentée à la figure 20. Dans cette position, une partie de ce crochet 34 est engagée dans un logement, ou renfoncement, 131 de la surface supérieure de l'embase 13, au voisinage de la première zone d'extrémité. Ce renfoncement 131 ayant sensiblement la même dimension que le crochet 34, la présence du crochet 34 dans le renfoncement (comme illustré sur la figure 20) empêche toute rotation de la platine 3 par rapport à l'embase 1 du siège. Ainsi, le crochet 34 empêche le passage du siège auto de sa configuration « groupe 1 » à sa configuration « groupe 0+ » quand le fauteuil est incliné.

Quand le siège auto, dans sa configuration « groupe 1 », est ramené dans une position droite (fauteuil non incliné) telle que représentée par les figures 19 et 21, la tige 261 vient appuyer sur une surface intérieure 341 du crochet 34, ce qui a pour effet de le faire passer dans sa position représentée à la figure 19, dans laquelle le crochet 34 n'est plus engagé dans le renfoncement 131, et ne s'oppose donc plus la rotation de la platine 3 par rapport à l'embase 1.

Comme le montre la figure 21, correspondant à la position groupe 0+, la surface supérieure 13 de l'embase 1 ne comporte pas, à proximité du bord fin 12 de l'embase, de renfoncement équivalent au renfoncement 131 présent sur la surface supérieure 13 à proximité du bord épais 11. Dans la configuration dos à la route du siège auto pour enfant, représentée par la figure 21, le crochet 34 ne peut donc pas s'escamoter dans un tel renfoncement. Il est donc maintenu dans la position représentée à la figure 21, dans laquelle il empêche tout coulissement de la tige 261 dans la glissière arrière 31. Ainsi, ce crochet mobile de verrouillage empêche l'inclinaison de confort supplémentaire du fauteuil quand le siège est en configuration « groupe 0+ ».

## Revendications

1. Siège auto pour enfant, comportant une embase (1) et un fauteuil (2), ledit fauteuil (2) comportant une assise (21) et un dossier (22), ladite embase (1) présentant une surface inférieure (14) destinée à venir en appui sur l'assise (92) d'un siège de véhicule, une première zone d'extrémité (11) destinée à être placée à proximité de la base du dossier (91) dudit siège de véhicule, et une seconde zone d'extrémité (12) destinée à être placée à proximité de la partie de l'assise (91) dudit siège de véhicule éloignée dudit dossier (92), ledit siège auto comprenant des moyens d'assemblage (191, 192, 291, 292 ; 195) permettant deux positions d'assemblage dudit fauteuil à ladite embase :
- une première position dans laquelle le dossier (22) dudit fauteuil est situé au-dessus de ladite première zone d'extrémité (11) de ladite embase ; et
- une seconde position axialement symétrique par rapport à ladite première position, ledit dossier (22) étant situé au-dessus de ladite seconde zone d'extrémité (12) de ladite embase,
l'axe de symétrie (194) entre lesdites première et seconde positions dudit fauteuil étant non perpendiculaire à un plan de base défini par ladite surface inférieure (14) de ladite embase,
**caractérisé en ce que** ledit fauteuil comprend des moyens d'inclinaison de confort (31, 261, 33, 262) permettant de faire varier l'inclinaison de l'assise (21) et/ou du dossier (22) dudit fauteuil par rapport à ladite embase (1), dans au moins une desdites positions, et
des moyens de verrouillage (34) empêchant l'utilisation desdits moyens d'inclinaison de confort (31, 261, 33, 262) dans une desdites première ou deuxième positions.

2. Siège auto pour enfant selon la revendication 1, **caractérisé en ce que** ladite embase (1) présente des moyens de fixation (15) au véhicule automobile placés de façon que ladite première zone d'extrémité (11) se trouve à proximité du dossier (91) dudit siège du véhicule automobile.

3. Siège auto pour enfant selon la revendication 2, **caractérisé en ce que** lesdits moyens de fixation (15) présentent un passage de sangle s'étendant dans ladite embase et définissant une surface d'appui (251), pour une sangle, sensiblement verticale.

4. Siège auto pour enfant selon l'une quelconque des revendications 1 à 3, **caractérisé en ce que** lesdits moyens d'assemblage comprennent des moyens de pivotement (195 ; 16) permettant le passage de ladite première position à ladite seconde position, et réciproquement, par rotation dudit fauteuil (2) par rapport à ladite embase (1) selon ledit axe de symétrie (194).

5. Siège auto pour enfant selon l'une quelconque des revendications 1 à 3, **caractérisé en ce que** lesdits moyens d'assemblage comprennent des moyens de solidarisation réversibles (191, 192, 291, 292 ; 195), aptes à solidariser le fauteuil (2) à ladite embase (1) dans ladite première position et dans ladite seconde position.

6. Siège auto pour enfant selon la revendication 4, **caractérisé en ce que** ledit fauteuil (2) comporte une platine (3) formant une partie desdits moyens de pivotement et portant une partie (31, 32) desdits moyens d'inclinaison de confort.

7. Siège auto pour enfant selon la revendication 6, **caractérisé en ce que** lesdits moyens d'inclinaison de confort comprennent au moins une glissière (32) dans laquelle peut circuler une tige (262), et une crémaillère (33) associée à ladite glissière (32) de façon à permettre l'immobilisation de ladite tige (262) dans ladite glissière (32).

8. Siège auto pour enfant selon l'une quelconque des revendications 6 et 7, **caractérisé en ce que** ladite platine (3) comprend un mécanisme de verrouillage (34), empêchant l'utilisation desdits moyens d'inclinaison de confort dans une desdites première ou deuxième positions.

9. Siège auto pour enfant selon la revendication 8, **caractérisé en ce que** lesdits moyens de verrouillage comprennent un élément mobile (34) pouvant pénétrer, dans une desdites première ou deuxième positions, dans un logement (131) ménagé dans la surface supérieure de ladite embase (1).

## Claims

1. Child's car seat, comprising a base (1) and a chair member (2), the chair member (2) comprising a seat member (21) and a backrest (22), the base (1) having a lower surface (14) which is intended to be supported on the seat member (92) of a vehicle seat, a first end zone (11) which is intended to be placed close to the base of the backrest (91) of the vehicle seat, and a second end zone (12) which is intended to be placed close to the portion of the seat member (91) of the vehicle seat remote from the backrest (92), the car seat comprising assembly means (191, 192, 291, 292; 195) allowing two assembly positions of the chair member on the base:
- a first position in which the backrest (22) of the chair member is located above the first end zone (11) of the base; and
- a second position which is axially symmetrical relative to the first position, the backrest (22) being located above the second end zone (12) of the base,
the axis of symmetry (194) between the first and second positions of the chair member being non-perpendicular relative to a base plane defined by the lower surface (14) of the base,
**characterised in that** the chair member comprises comfort inclination means (31, 261, 33, 262) which allow the inclination of the seat member (21) and/or the backrest (22) of the chair member to be varied relative to the base (1) in at least one of the positions, and locking means (34) which prevent the use of the comfort inclination means (31, 261, 33, 262) in one of the first or second positions.

2. Child's car seat according to claim 1, **characterised in that** the base (1) has means (15) for fixing to the motor vehicle positioned so that the first end zone (11) is located close to the backrest (91) of the seat of the motor vehicle.

3. Child's car seat according to claim 2, **characterised in that** the fixing means (15) have a strap passage which extends in the base and which defines a support surface (251) for a strap which is substantially vertical.

4. Child's car seat according to any one of claims 1 to 3, **characterised in that** the assembly means comprise pivot means (195; 16) which allow movement from the first position to the second position, and vice-versa, by the chair member (2) being rotated relative to the base (1) about the axis of symmetry (194).

5. Child's car seat according to any one of claims 1 to 3, **characterised in that** the assembly means comprise reversible fixing means (191, 192, 291, 292; 195) which are capable of fixing the chair member (2) to the base (1) in the first position and in the second position.

6. Child's car seat according to claim 4, **characterised in that** the chair member (2) comprises a plate (3) which forms a portion of the pivot means and which carries a portion (31, 32) of the comfort inclination means.

7. Child's car seat according to claim 6, **characterised in that** the comfort inclination means comprise at least one sliding member (32) in which a rod (262) can travel, and a rack (33) which is associated with the sliding member (32) so as to allow the rod (262) to be fixed in the sliding member (32).

8. Child's car seat according to either claim 6 or claim 7, **characterised in that** the plate (3) comprises a locking mechanism (34) which prevents the use of the comfort inclination means in one of the first or second positions.

9. Child's car seat according to claim 8, **characterised in that** the locking means comprise a movable element (34) which is able to be introduced, in one of the first or second positions, in a housing (131) which is provided in the upper surface of the base (1).

## Patentansprüche

1. Autokindersitz, umfassend einen Sockel (1) und einen Sitz (2), wobei der Sitz (2) eine Sitzfläche (21) und eine Rückenlehne (22) umfasst, wobei der Sockel (1) eine untere Fläche (14), die dazu bestimmt ist, auf der Sitzfläche (92) eines Fahrzeugsitzes aufzuliegen, eine erste Endzone (11), die dazu bestimmt ist, in der Nähe der Basis der Rückenlehne (91) des Fahrzeugsitzes angeordnet zu werden, und eine zweite Endzone (12) aufweist, die dazu bestimmt ist, in der Nähe des Teils der Sitzfläche (91) des Fahrzeugsitzes von der Rückenlehne (92) entfernt angeordnet zu werden, wobei der Autositz Montagemittel (191, 192, 292; 195) umfasst, die zwei Befestigungspositionen des Sitzes am Sockel ermöglichen:
- eine erste Position, in der die Rückenlehne (22) des Sitzes über der ersten Endzone (11) des Sockels angeordnet ist; und
- eine zweite Position, die axial symmetrisch zur ersten Position ist, wobei sich
die Rückenlehne (22) über der zweiten Endzone (12) des Sockels befindet, wobei die Symmetrieachse (194) zwischen der ersten und zweiten Position des Sitzes nicht zu einer Basisebene senkrecht ist, die von der unteren Fläche (14) des Sockels gebildet wird,
**dadurch gekennzeichnet, dass** der Sitz Mittel zur Komfortneigung (31, 261, 33, 262) umfasst, die es ermöglichen, die Neigung der Sitzfläche (21) und/oder der Rückenlehne (22) des Sitzes in Bezug zum Sockel (1) in mindestens einer der Positionen zu variieren, und
wobei Verriegelungsmittel (34) die Verwendung der Mittel zur Komfortneigung (31, 261, 33, 262) in einer der ersten oder zweiten Positionen verhindern.

2. Autokindersitz nach Anspruch 1, **dadurch gekennzeichnet, dass** der Sockel (1) Mittel zur Befestigung (15) am Fahrzeug umfasst, die derart vorgesehen sind, dass sich die erste Endzone (11) in der Nähe der Rückenlehne (91) des Fahrzeugsitzes befindet.

3. Autokindersitz nach Anspruch 2, **dadurch gekennzeichnet, dass** die Befestigungsmittel (15) eine Gurtdurchführung aufweisen, die sich in dem Sockel erstreckt und eine im Wesentlichen vertikale Auflagefläche (251) für einen Gurt definiert.

4. Autokindersitz nach einem der Ansprüche 1 bis 3, **dadurch gekennzeichnet, dass** die Montagemittel Schwenkmittel (195; 16) umfassen, die den Übergang von der ersten Position in die zweite Position und umgekehrt durch Drehen des Sitzes (2) in Bezug zum Sockel (1) entlang der Symmetrieachse (194) ermöglichen.

5. Autokindersitz nach einem der Ansprüche 1 bis 3, **dadurch gekennzeichnet, dass** die Montagemittel umkehrbare Verbindungsmittel (191, 192, 291, 292; 195) umfassen, die geeignet sind, den Sitz (2) mit dem Sockel (1) in der ersten Position und in der zweiten Position zu verbinden.

6. Autokindersitz nach Anspruch 4, **dadurch gekennzeichnet, dass** der Sitz (2) eine Platte (3) umfasst, die einen Teil der Schwenkmittel bildet und einen Teil (31, 32) der Mittel zur Komfortneigung trägt.

7. Autokindersitz nach Anspruch 6, **dadurch gekennzeichnet, dass** die Mittel zur Komfortneigung mindestens eine Führungsschiene (32), in der eine Stange (262) geführt werden kann, und eine Zahnschiene (33) umfassen, die der Führungsschiene (32) zugeordnet ist, um die Feststellung der Stange (262) in der Führungsschiene (32) zu ermöglichen.

8. Autokindersitz nach einem der Ansprüche 6 und 7, **dadurch gekennzeichnet, dass** die Platte (3) einen Verriegelungsmechanismus (34) umfasst, der die Verwendung der Mittel zur Komfortneigung in einer der ersten oder zweiten Positionen verhindert.

9. Autokindersitz nach Anspruch 8, **dadurch gekennzeichnet, dass** die Verriegelungsmittel ein bewegliches Element (34) umfassen, das in einer der ersten oder zweiten Positionen in einen Sitz (131) eindringen kann, die in der oberen Fläche des Sockels (1) vorgesehen ist.
